# EUROPEAN PATENT APPLICATION

(11) **EP 2 493 258 A1**
(43) Date of publication of application: **29.08.2012**
(21) Application number: 10824905.3
(22) Date of filing: 19.10.2010
(51) Int. Cl.: H04W 72/12, H04W 28/18, H04W 52/24

(54) **RADIO BASE STATION**

(30) Priority: 19.10.2009 JP 2009240356
(71) Applicant: NTT DoCoMo, Inc., Tokyo 100-6150 (JP)
(72) Inventor: KIYOSHIMA, Kohei, Tokyo 100-6150 (JP); OKUBO, Naoto, Tokyo 100-6150 (JP); ISHII, Hiroyuki, Tokyo 100-6150 (JP)
(74) Representative: HOFFMANN EITLE
(86) International application number: PCT/JP2010/068308
(87) International publication number: WO 2011/049056

(57) **Abstract**

Even when it is not possible to appropriately receive SRS, a control process is appropriately performed. A radio base station eNB according to the present invention includes a control unit 13 configured to perform a predetermined control process based on SRS periodically transmitted by a mobile station UE, an SRS reliability determination unit 11 configured to compare the reception quality of an SRS at the reception timing of the SRS with a predetermined threshold value, and an SRS transmission state determination unit 12 configured to determine whether the SRS is being transmitted by the mobile station UE based on a result of the comparison, wherein, when it is determined that the SRS is not being transmitted by the mobile station UE, the control unit 13 is configured not to perform a predetermined control process based on the SRS at the reception timing of the SRS as described above.

## Description

### TECHNICAL FIELD

The present invention relates to a radio base station.

### BACKGROUND ART

In a mobile communication system employing an LTE (Long Term Evolution) scheme, a mobile station UE is configured to periodically transmit SRS (Sounding Reference Signal) to a radio base station eNB.

The SRS denotes a reference signal which is mainly used when the radio base station eNB measures uplink reception quality.

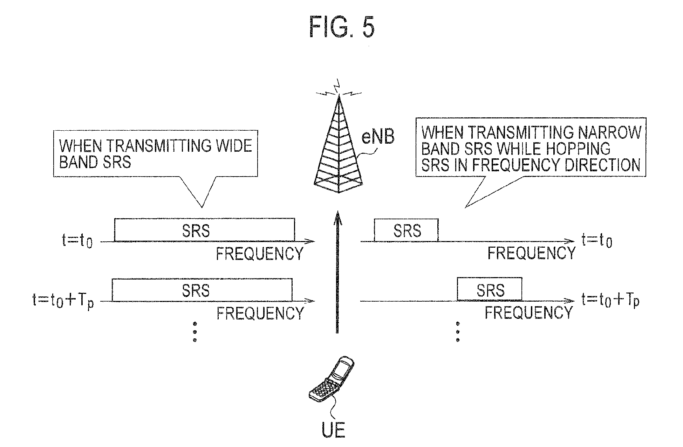

As illustrated in Fig. 5, in order for a radio base station eNB to measure uplink reception quality in the entire band, a mobile station UE may transmit the SRS in a wide band or transmit the SRS in a narrow band by hopping the SRS in the frequency direction.

In addition, in the LTE mobile communication system, it has been defined that the mobile station UE should transmit the SRS. However, in the following two cases, since it is not possible for the radio base station eNB to receive the SRS, there is a problem that it is not possible to appropriately perform a control process using the SRS.

In the first case, the mobile station UE does not transmit the SRS in violation of the definition of the LTE scheme.

In the second case, at the time of start of communication and the like, the transmission start time point of the SRS by the mobile station UE is deviated from the reception start time point of the SRS by the radio base station eNB. Such a case may occur due to a time lag between the notification of an SRS resource to the mobile station UE and the reflection thereof.

### SUMMARY OF THE INVENTION

Therefore, the present invention has been achieved in view of the above-described problems, and an object thereof is to provide a radio base station capable of appropriately performing a control process even when it is not possible to appropriately receive SRS.

A first characteristic of the present embodiment is summarized in that a radio base station comprising, a control unit configured to perform a predetermined control process based on a reference signal periodically transmitted by a mobile station, a reference signal reliability determination unit configured to compare a reception quality of the reference signal at a reception timing of the reference signal with a predetermined threshold value, and a reference signal transmission state determination unit configured to determine whether the reference signal is being transmitted by the mobile station based on a result of the comparison, in which when it is determined that the reference signal is not being transmitted by the mobile station, the control unit is configured not to perform a predetermined control process based on the reference signal at the reception timing.

### BRIEF DESCRIPTION OF THE DRAWINGS

[Fig. 1] Fig. 1 is a diagram showing the entire configuration of a mobile communication system according to a first embodiment of the present invention.
[Fig. 2] Fig. 2 is a functional block diagram of a radio base station according to the first embodiment of the present invention.
[Fig. 3] Fig. 3 is a diagram explaining an operation in which the radio base station according to the first embodiment of the present invention determines an SRS transmission state.
[Fig. 4] Fig. 4 is a flowchart illustrating an operation of the radio base station according to the first embodiment of the present invention.
[Fig. 5] Fig. 5 is a diagram explaining SRS transmitted in an LTE mobile communication system.

### BEST MODES FOR CARRYING OUT THE INVENTION

### (Configuration of mobile communication system according to first embodiment of the present invention)

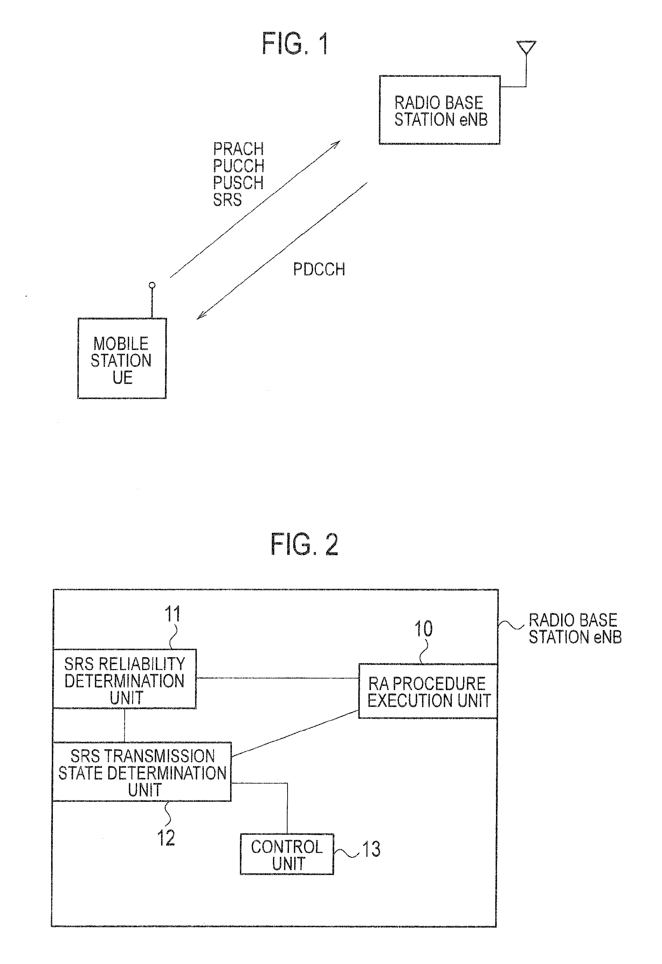

With reference to Fig. 1 to Fig. 3, the configuration of a mobile communication system according to a first embodiment of the present invention will be described.

The mobile communication system according to the present embodiment is an LTE mobile communication system, and includes a radio base station eNB and a mobile station UE as illustrated in Fig. 1.

The mobile communication system according to the present embodiment is configured such that in a downlink, the radio base station eNB transmits a downlink control signal via PDCCH (Physical Downlink Control Channel).

Furthermore, the mobile communication system according to the present embodiment is configured such that in an uplink, the mobile station UE transmits an RACH signal (for example, RACH preamble and the like) used in an RA procedure via PRACH (Physical Random Access Channel).

Furthermore, the mobile communication system according to the present embodiment is configured such that in the uplink, the mobile station UE transmits an uplink control signal via PUCCH (Physical Uplink Control Channel) while transmitting an uplink data signal via PUSCH (Physical Uplink Shared Channel).

Moreover, the mobile communication system according to the present embodiment is configured such that in the uplink, the mobile station UE periodically transmits the SRS.

As illustrated in Fig. 2, the radio base station eNB includes an RA procedure execution unit 10, an SRS reliability determination unit 11, an SRS transmission state determination unit 12, and a control unit 13.

The RA procedure execution unit 10 is configured to execute an RA procedure with respect to the mobile station UE.

The SRS reliability determination unit 11 is configured to compare the reception quality of the SRS at the reception timing of the SRS with a predetermined threshold value.

Specifically, the SRS reliability determination unit 11 is configured to attempt to receive the SRS at the reception timing of each SRS, and determine that the reliability of the SRS is "NG" when the measured SIR (Signal-to-Interference Ratio) of the SRS is equal to or less than the predetermined threshold value.

Meanwhile, when the reception quality (for example, the SIR) of the SRS measured at the reception timing of each SRS exceeds the predetermined threshold value, the SRS reliability determination unit 11 is configured to determine that the reliability of the SRS is "OK".

The SRS transmission state determination unit 12 is configured to determine whether a state where the SRS is being transmitted by the mobile station UE is occurring based on a determination result of the SRS reliability determination unit 11.

That is, the SRS transmission state determination unit 12 is configured to determine whether the SRS transmission state of each of the mobile stations UE is an SRS transmission state "OK" or an SRS transmission state "NG".

Here, the SRS transmission state "OK" indicates a state in which it has been determined that the SRS is being transmitted by the mobile station UE, and the SRS transmission state "NG" indicates a state in which it has been determined that the SRS is not being transmitted by the mobile station UE.

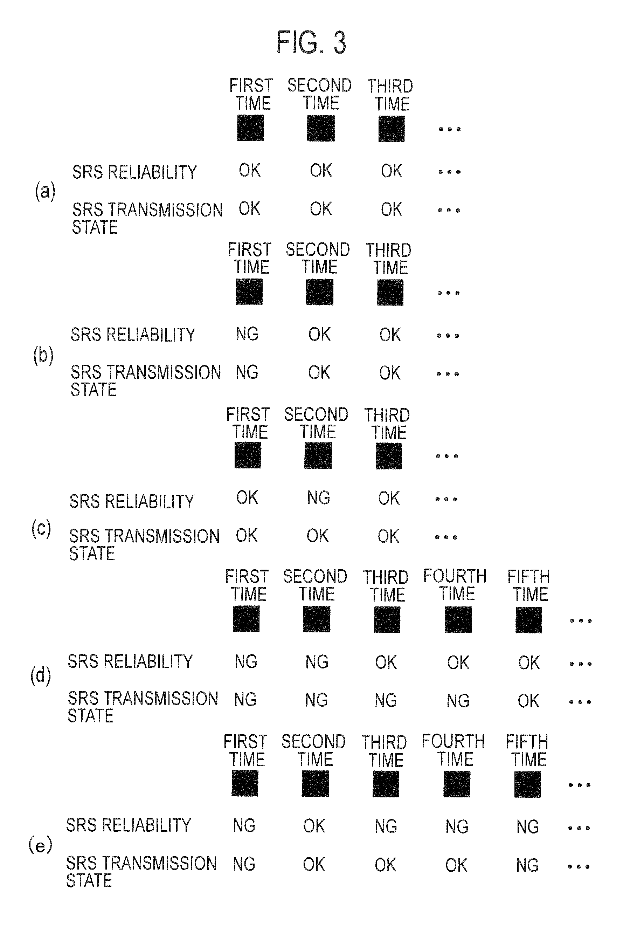

For example, as illustrated in Fig. 3(a) and Fig. 3(c), when the reception quality of the SRS exceeds the predetermined threshold value at the first reception timing of the SRS after the random access procedure, the SRS transmission state determination unit 12 may also be configured to determine that the SRS is being transmitted by the mobile station UE (the SRS transmission state is "OK").

Meanwhile, as illustrated in Fig. 3(b), Fig. 3(d), and Fig. 3(e), when the reception quality of the SRS is equal to or less than the predetermined threshold value at the first reception timing of the SRS after the random access procedure, the SRS transmission state determination unit 12 may also be configured to determine that the SRS is not being transmitted by the mobile station UE (the SRS transmission state is "NG").

Furthermore, as illustrated in Fig. 3(d), when the reception quality of the SRS is equal to or less than the predetermined threshold value at both the first and second reception timings of the SRS after the random access procedure, the SRS transmission state determination unit 12 may also be configured to determine that the SRS is not being transmitted by the mobile station UE (the SRS transmission state is "NG") at the second reception timing of the SRS after the random access procedure.

Meanwhile, as illustrated in Fig. 3(a), Fig. 3(b), Fig. 3(c), and Fig. 3(e), when the reception quality of the SRS is not equal to or less than the predetermined threshold value at least one of the first and second reception timings of the SRS after the random access procedure, the SRS transmission state determination unit 12 may also be configured to determine that the SRS is being transmitted by the mobile station UE (the SRS transmission state is "OK") at the second reception timing of the SRS after the random access procedure.

Furthermore, as illustrated in Fig. 3(e), until it occurs a state where the reception quality of the SRS is equal to or less than the predetermined threshold value at a predetermined number of N_{OK→NG} (for example, three) continuous reception timings of the SRS subsequent to the third reception timing after the random access procedure, the SRS transmission state determination unit 12 may also be configured not to change the state (the SRS transmission state "OK"), in which the SRS is being transmitted by the mobile station UE, to the state (the SRS transmission state "NG") in which the SRS is not being transmitted by the mobile station UE.

Meanwhile, as illustrated in Fig. 3(d), until it occurs a state where the reception quality of the SRS is not equal to or less than the predetermined threshold value at a predetermined number of N_{NG→OK} (for example, three) continuous reception timings of the SRS subsequent to the third reception timing after the random access procedure, the SRS transmission state determination unit 12 may also be configured not to change the state, in which the SRS is not being transmitted by the mobile station UE, to the state in which the SRS is being transmitted by the mobile station UE.

Here, the predetermined number N_{OK→NG} and the predetermined number N_{NG→OK} may have the same value or different values.

In addition, when a path loss exceeds the predetermined threshold value, the SRS transmission state determination unit 12 may also be configured to determine that the SRS is not being transmitted by the mobile station UE (the SRS transmission state is "NG") regardless of the comparison result of the reception quality of the SRS and the predetermined threshold value.

Basically, since the reception quality of the SRS from the mobile station UE with a large path loss is degraded, it is probable that the SRS transmission state is unsettling with respect to the mobile station UE where the reliability of the SRS often results in "NG".

In this regard, the SRS transmission state determination unit 12 always determines that the SRS transmission state is "NG" with respect to the mobile station UE with the large path loss, so that it is possible to prevent the SRS transmission state from being unstable.

The control unit 13 is configured to perform a predetermined control process based on the SRS periodically transmitted by the mobile station UE.

Here, the predetermined control process may include a frequency scheduling process, a process of selecting a modulation method and a coding rate (AMC: Adaptive Modulation and channel Coding), an uplink transmission power control (TPC: Transmission Power Control) process, a timing adjustment process, and the like.

For example, when it is determined that the SRS is being transmitted by the mobile station UE (the SRS transmission state is "OK"), the control unit 13 may also be configured to perform a frequency scheduling process with respect to the mobile station UE based on the reception quality of the SRS at the reception timing of the SRS as described above, that is, to decide a band to be assigned to the mobile station UE based on reception quality in each band, which has been measured by the SRS.

Meanwhile, when it is determined that the SRS is not being transmitted by the mobile station UE (the SRS transmission state is "NG"), the control unit 13 may also be configured not to perform the frequency scheduling process itself with respect to the mobile station UE.

For example, when it is determined that the SRS is not being transmitted by the mobile station UE (the SRS transmission state is "NG"), the control unit 13 may also be configured to assign a band from an end of an assignable band.

Furthermore, when it is determined that the SRS is being transmitted by the mobile station UE (the SRS transmission state is "OK"), the control unit 13 may also be configured to perform the process of selecting a modulation method and a coding rate with respect to the mobile station UE based on the reception quality of the SRS at the reception timing of the SRS as described above, that is, to decide a modulation method or a payload size for the mobile station UE based on the reception quality of a band assigned to the mobile station UE, which has been measured by the SRS.

Meanwhile, when it is determined that the SRS is not being transmitted by the mobile station UE (the SRS transmission state is "NG"), the control unit 13 may also be configured to perform the process of selecting a modulation method and a coding rate based on uplink reception quality calculated by the path loss, instead of the process of selecting a modulation method and a coding rate based on the SRS at the reception timing of the SRS as described above.

For example, when it is determined that the SRS is not being transmitted by the mobile station UE (the SRS transmission state is "NG"), the control unit 13 may also be configured to perform the process of selecting a modulation method and a coding rate based on the path loss of the mobile station UE.

Furthermore, when it is determined that the SRS is being transmitted by the mobile station UE (the SRS transmission state is "OK"), the control unit 13 may also be configured to perform the uplink transmission power control process with respect to the mobile station UE based on the reception quality of the SRS at the reception timing of the SRS as described above.

Meanwhile, when it is determined that the SRS is not being transmitted by the mobile station UE (the SRS transmission state is "NG"), the control unit 13 may also be configured to perform the uplink transmission power control process based on the reception quality of another reference signal, instead of the uplink transmission power control process based on the SRS at the reception quality of the SRS as described above.

For example, when it is determined that the SRS is not being transmitted by the mobile station UE (the SRS transmission state is "NG"), the control unit 13 may also be configured to perform the uplink transmission power control process with respect to the mobile station UE based on the reception quality of DM RS (Demodulation RS).

### (Operation of the mobile communication system according to the first embodiment of the present invention)

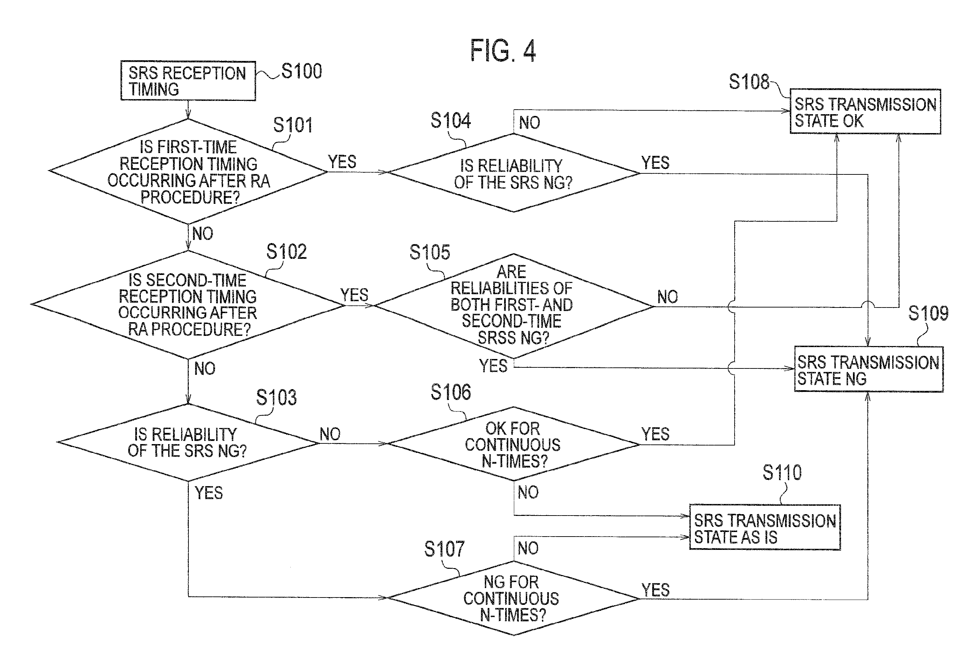

With reference to Fig. 4, the operation of the mobile communication system according to the first embodiment of the present invention, specifically, the operation of the radio base station eNB according to the first embodiment of the present invention will be described.

As illustrated in Fig. 4, if the reception timing of the SRS is reached in step S 100, the radio base station eNB determines whether the reception timing of the SRS is the first reception timing of the SRS after the RA procedure in step S101.

In the case of "YES", the present operation proceeds to step S104, and in the case of "NO", the present operation proceeds to step S102.

In step S102, the radio base station eNB determines whether the reception timing of the SRS is the second reception timing of the SRS after the RA procedure.

In the case of "YES", the present operation proceeds to step S105, and in the case of "NO", the present operation proceeds to step S103.

In step S103, the radio base station eNB determines whether the reliability of the SRS is "NG" at the reception timing of the SRS.

In the case of "YES", the present operation proceeds to step S107, and in the case of "NO", the present operation proceeds to step S106.

In step S104, the radio base station eNB determines whether the reliability of the SRS is "NG" at the reception timing of the SRS.

In the case of "YES", the present operation proceeds to step S109, and in the case of "NO", the present operation proceeds to step S108.

In step S105, the radio base station eNB determines whether the reliability of the SRS is "NG" at both the first and second reception timings of the SRS after the random access procedure.

In the case of "YES", the present operation proceeds to step S109, and in the case of "NO", the present operation proceeds to step S108.

In step S106, the radio base station eNB determines whether the reliability of the SRS is "OK" at a predetermined number of N_{NG→OK} continuous reception timings of the SRS.

In the case of "YES", the present operation proceeds to step S108, and in the case of "NO", the present operation proceeds to step S110.

In step S107, the radio base station eNB determines whether the reliability of the SRS is "NG" at a predetermined number of N_{OK→NG} continuous reception timings of the SRS.

In the case of "YES", the present operation proceeds to step S109, and in the case of "NO", the present operation proceeds to step S110.

In step S108, the radio base station eNB changes an SRS transmission state "NG" to an SRS transmission state "OK".

In step S109, the radio base station eNB changes the SRS transmission state "OK" to the SRS transmission state "NG".

In step S110, the radio base station eNB does not change the SRS transmission state.

### (Operation and Effect of the mobile communication system according to the first embodiment of the present invention)

In accordance with the mobile communication system according to the first embodiment of the present invention, even when it is not possible to receive SRS from a mobile station UE, a predetermined control process is appropriately performed, so that it is possible to avoid a problem that interference and the like occur to another mobile station UE.

The characteristics of the present embodiment as described above may be expressed as follows.

A first characteristic of the present embodiment is summarized in that a radio base station eNB includes: a control unit 13 configured to perform a predetermined control process based on SRS (a reference signal) periodically transmitted by a mobile station UE; an SRS reliability determination unit 11 (a reference signal reliability determination unit) configured to compare the reception quality of the SRS at the reception timing of the SRS with a predetermined threshold value; and an SRS transmission state determination unit 12 (a reference signal transmission state determination unit) configured to determine whether the SRS is being transmitted by the mobile station UE based on a result of the comparison, wherein, when it is determined that the SRS is not being transmitted by the mobile station UE, the control unit 13 is configured not to perform a predetermined control process based on the SRS at the reception timing of the SRS as described above.

In the first characteristic of the present embodiment, the predetermined control process is a frequency scheduling process, and when it is determined that the SRS is not being transmitted by the mobile station UE, the control unit 13 may also be configured not to perform the frequency scheduling process itself based on the reception quality of the SRS.

In the first characteristic of the present embodiment, the predetermined control process is a process of selecting a modulation method and a coding rate, and when it is determined that the SRS is not being transmitted by the mobile station UE, the control unit 13 may also be configured to perform the process of selecting a modulation method and a coding rate based on uplink reception quality calculated by path loss, instead of a process of selecting a modulation method and a coding rate based on the SRS at the reception quality of the SRS as described above.

In the first characteristic of the present embodiment, the predetermined control process is an uplink transmission power control process, and when it is determined that the SRS is not being transmitted by the mobile station UE, the control unit 13 may also be configured to perform an uplink transmission power control process based on another reference signal (for example, DRS), instead of an uplink transmission power control process based on the SRS at the reception quality of the SRS as described above.

In the first characteristic of the present embodiment, when the reception quality of the SRS is equal to or less than the predetermined threshold value at the first reception timing of the SRS after a random access procedure, the SRS transmission state determination unit 12 may also be configured to determine that SRS is not being transmitted by the mobile station UE.

In the first characteristic of the present embodiment, when the reception quality of the SRS is equal to or less than the predetermined threshold value at both the first and second reception timings of the SRS after the random access procedure, the SRS transmission state determination unit 12 may also be configured to determine that SRS is not being transmitted by the mobile station UE at the second reception timing of the SRS after the random access procedure.

In the first characteristic of the present embodiment, when the reception quality of the SRS is not equal to or less than the predetermined threshold value at least one of the first and second reception timings of the SRS after the random access procedure, the SRS transmission state determination unit 12 may also be configured to determine that SRS is being transmitted by the mobile station UE at the second reception timing of the SRS after the random access procedure.

In the first characteristic of the present embodiment, until it occurs a state where the reception quality of the SRS is equal to or less than the predetermined threshold value at a predetermined number of continuous reception timings of the SRS subsequent to the third reception timing after the random access procedure, the SRS transmission state determination unit 12 may also be configured not to change the state, in which SRS is being transmitted by the mobile station UE, to the state in which the SRS is not being transmitted by the mobile station UR.

In the first characteristic of the present embodiment, until it occurs a state where the reception quality of the SRS is not equal to or less than the predetermined threshold value at a predetermined number of continuous reception timings of the SRS subsequent to the third reception timing after the random access procedure, the SRS transmission state determination unit 12 may also be configured not to change the state in which SRS is not being transmitted by the mobile station UE, to the state in which the SRS is being transmitted by the mobile station UE.

In addition, the operation of the above-mentioned the radio base station eNB or the mobile station UE may be implemented by hardware, may also be implemented by a software module executed by a processor, or may further be implemented by the combination of the both.

The software module may be arranged in a storage medium of an arbitrary format such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

Such a storage medium is connected to the processor so that the processor can write and read information into and from the storage medium. Such a storage medium may also be accumulated in the processor. Such storage medium and processor may be arranged in an ASIC. Such ASIC may be arranged in the radio base station eNB or the mobile station UE. As a discrete component, such storage medium and processor may be arranged in the radio base station eNB or the mobile station UE.

Thus, the present invention has been specifically explained by using the above-mentioned embodiments; however, it is obvious that for persons skilled in the art, the present invention is not limited to the embodiments explained herein. The present invention can be implemented as corrected and modified modes without departing from the gist and the scope of the present invention defined by the claims. Therefore, the description of the specification is intended for explaining the example only and does not impose any limited meaning to the present invention.

### Industrial Applicability

As described above, in accordance with the present invention, it is possible to provide a radio base station capable of appropriately performing a control process even when it is not possible to appropriately receive SRS.

## Claims

1. A radio base station comprising:
a control unit configured to perform a predetermined control process based on a reference signal periodically transmitted by a mobile station;
a reference signal reliability determination unit configured to compare a reception quality of the reference signal at a reception timing of the reference signal with a predetermined threshold value; and
a reference signal transmission state determination unit configured to determine whether the reference signal is being transmitted by the mobile station based on a result of the comparison, wherein
when it is determined that the reference signal is not being transmitted by the mobile station, the control unit is configured not to perform a predetermined control process based on the reference signal at the reception timing.

2. The radio base station according to claim 1, wherein
the predetermined control process is a frequency scheduling process, and
when it is determined that the reference signal is not being transmitted by the mobile station, the control unit is configured not to perform the frequency scheduling process itself.

3. The radio base station according to claim 1, wherein
the predetermined control process is a process of selecting a modulation method and a coding rate, and
when it is determined that the reference signal is not being transmitted by the mobile station, the control unit is configured to perform the process of selecting a modulation method and a coding rate based on uplink reception quality calculated by path loss, instead of a process of selecting a modulation method and a coding rate based on the reference signal at the reception timing.

4. The radio base station according to claim 1, wherein
the predetermined control process is an uplink transmission power control process, and
when it is determined that the reference signal is not being transmitted by the mobile station, the control unit is configured to perform an uplink transmission power control process based on another reference signal, instead of an uplink transmission power control process based on the reference signal at the reception timing.

5. The radio base station according to claim 1, wherein
when the reception quality of the reference signal is equal to or less than the predetermined threshold value at the first reception timing after a random access procedure, the reference signal transmission state determination unit is configured to determine that the reference signal is not being transmitted by the mobile station.

6. The radio base station according to claim 1, wherein
when the reception quality of the reference signal is equal to or less than the predetermined threshold value at both the first and second reception timings after a random access procedure, the reference signal transmission state determination unit is configured to determine that the reference signal is not being transmitted by the mobile station at the second reception timing after the random access procedure.

7. The radio base station according to claim 1, wherein
when the reception quality of the reference signal is not equal to or less than the predetermined threshold value at least one of the first and second reception timings after a random access procedure, the reference signal transmission state determination unit is configured to determine that the reference signal is being transmitted by the mobile station at the second reception timing after the random access procedure.

8. The radio base station according to claim 1, wherein
until it occurs a state where the reception quality of the reference signal is equal to or less than the predetermined threshold value at a predetermined number of continuous reception timings subsequent to a third reception timing after a random access procedure, the reference signal transmission state determination unit is configured not to change a state, in which the reference signal is being transmitted by the mobile station, to a state in which the reference signal is not being transmitted by the mobile station.

9. The radio base station according to claim 1, wherein
until it occurs a state where the reception quality of the reference signal is not equal to or less than the predetermined threshold value at a predetermined number of continuous reception timings subsequent to a third reception timing after a random access procedure, the reference signal transmission state determination unit is configured not to change a state, in which the reference signal is not being transmitted by the mobile station, to a state in which the reference signal is being transmitted by the mobile station.
